# EUROPÄISCHE PATENTSCHRIFT

(11) **EP 1 521 880 B1**
(45) Veröffentlichungstag und Bekanntmachung des Hinweises auf die Patenterteilung: **02.11.2011**
(21) Anmeldenummer: 03763599.2
(22) Anmeldetag: 09.07.2003
(51) Int. Cl.: D06F 58/08, F02B 77/08, F16P 7/02

(54) **SENSOR FÜR RIEMENRISS**
SENSOR FOR DETECTING BELT RUPTURE
CAPTEUR SERVANT A DETECTER UNE FISSURE DANS UNE COURROIE

(30) Priorität: 10.07.2002 DE 10231078
(43) Veröffentlichungstag der Anmeldung: 13.04.2005
(73) Patentinhaber: Marquardt GmbH, 78604 Rietheim-Weilheim (DE)
(72) Erfinder: MÜLLER, Heinrich, 78532 Tuttlingen (DE); LONAU, Manfred, 78604 Rietheim-Weilheim (DE)
(74) Vertreter: Otten, Herbert
(86) Internationale Anmeldenummer: PCT/DE2003/002298
(87) Internationale Veröffentlichungsnummer: WO 2004/007828

(56) Entgegenhaltungen:
- EP-A- 0 110 318
- GB-A- 839 471
- US-A- 3 890 720
- US-A- 4 488 363

## Beschreibung

Die Erfindung begriff einen Sensor zur Detektierung eines Risses und/oder einer Längenänderung in einem Riemen nach dem Oberbegriff des Patentanspruchs 1.

In elektrischen Hausgeräten, wie in einem Wäschetrockner, einer Waschmaschine o. dgl., erfolgt der Antrieb der Trommel mittels eines Elektromotors über einen Antriebsriemen. Beim Antriebsriemen handelt es sich um ein Verschleißteil, so daß das Reißen bzw. der Bruch und/oder eine unzulässige Längung des Riemens zu überwachen ist, um dann gegebenenfalls den Elektromotor rechtzeitig abzuschalten oder sonstige Maßnahmen einzuleiten.

Ein aus der EP 0 110 318 A1 bekannter Sensor zur Detektierung eines Risses in einem Riemen ist mit einem bewegbaren Übertragungselement, das innerhalb einer Riemenspanneinrichtung in Wirkverbindung mit dem Riemen steht, und mit einem ein Kontaktsystem besitzenden elektrischen Schalter ausgestattet. Das Übertragungselement wirkt dabei derart auf den elektrischen Schalter ein, daß das Kontaktsystem bei unzulässiger Längenänderung und/oder Riß des Riemens umschaltet.

Bei diesem Sensor wird ein herkömmlicher Schalter als elektrischer Schalter verwendet. Es hat sich nun herausgestellt, daß die auftretenden Toleranzen bei der Riemenlänge sowie im Hinblick auf den Umschaltpunkt beim Schalter kritisch sind. Dies kann dazu führen, daß der Sensor nicht funktionssicher arbeitet. Im Fall der unzulässigen Längung des Riemens besteht zudem die Gefahr, daß der Schalter extrem langsam betätigt wird und - insbesondere bei Einsatz des konventionellen Schalters - bei Verharren kurz vor dem Schaltpunkt in Bereich einer Kontaktkraft von Null betrieben wird. Dadurch entsteht ein unsicherer Schaltzustand und die Gefahr der Kontaktverscliweißung. Durch eine leichte Hin- und Herbewegung der Spanneinrichtung ergibt sich außerdem die Gefahr des mehrfachen Einund Ausschaltens beim Betrieb in diesem Grenzbereich.

Desweiteren ist aus der US 3 890 720 A eine Riemenspanneinrichtung für einen Wäschetrockner bekannt, die ebenfalls einen Sensor zur Detektierung eines Risses im Riemen aufweist. Die Riemenspanneinrichtung besteht aus einer Riemenspannrolle und einem federgespannten Träger. Bei einem Riemenriß betätigt der Träger einen Schalter zum Abschalten des Wäschetrockners. Auch hier ist der Schalter in der Art eines konventionellen elektrischen Schalters ausgestaltet.

Der Erfindung liegt die Aufgabe zugrunde, einen Sensor zur Detektierung eines Risses und/oder einer Längenänderung in einem Riemen mit geringerer Toleranzempfindlichkeit anzugeben.

Diese Aufgabe wird bei einem gattungsgemäßen Sensor durch die kennzeichnenden Merkmale des Anspruchs 1 gelöst.

Beim erfindungsgemäßen Sensor besteht das Kontaktsystem aus einem eine Blattfeder mit einer Kontaktfläche aufweisenden Schaltkontakt und einem zugehörigen Festkontakt. Die Kontaktfläche des Schaltkontakts ist an einem ersten Ende der Blattfeder angeordnet, während das Übertragungselement auf das andere zweite Ende der Blattfeder einwirkt. Ein einseitig freier Schenkel geht in etwa vom ersten Ende der Blattfeder in Richtung zum zweiten Ende ab und vom zweiten Ende der Blattfeder geht wiederum ein weiterer einseitig freier Schenkel in Richtung zum ersten Ende ab. Die freien Enden der beiden Schenkel sind jeweils an einem Trägerteil des Schalters mit einem Versatz zueinander eingespannt, derart daß der Schaltkontakt des Kontaktsystems kaskadenartig sowie bistabil umschaltet.

Die erfindungsgemäße Lösung vermeidet die genannten Nachteile, indem als Kontaktsystem ein bistabiles Schnappsystem mit Kaskade eingesetzt wird. Durch Versatz der beiden Einspannstellen am Trägerteil wird erreicht, daß der vom Übertragungselement betätigte blattfederartige Schaltkontakt beim ersten Überschreiten des Totpunktes umschnappt. Im Bereich des Totpunktes liegt auf der Seite der Kontaktfläche am Schaltkontakt durch den Versatz der Einspannstellen immer noch genügend Kontaktkraft an, um den anliegenden Strom sicher zu führen. Darüber hinaus wird auch bei extrem langsamer Betätigung des Schalters gewährleistet, daß bis zum Schaltpunkt genügend Kontaktkraft am Schaltkontakt anliegt, um den Strom des Elektromotors zu führen. Beim Umschnappen der dem Übertragungselement zugewandten Seite des Schaltkontakts wird auch die der Kontaktfläche zugewandte Seite des Schaltkontakts schlagartig über ihren Totpunkt geführt und der Stromkreis sicher unterbrochen. Aufgrund der Bistabilität wird weiterhin ein unzulässiges Hin- und Herschalten des Kontaktsystems im Bereich des Schaltpunktes vermieden.

Weitere Ausgestaltungen der Erfindung sind Gegenstand der Unteransprüche.

So kann das Übertragungselement als einseitig gelagerter Hebel ausgebildet sein, wobei eine Rolle zur Führung des Riemens an dem dem Lager gegenüberliegenden Ende des Hebels angeordnet ist. Das Übertragungselement ist mittels eines elastischen Elements, und zwar insbesondere mittels einer Zugfeder, in Richtung auf den Schaltkontakt beaufschlagt. Eine derartige Anordnung gewährleistet ein sofortiges und unverzögertes Umschalten des Kontaktsystems durch das Übertragungselement nach dem Reissen des Riemens.

Um den Sensor vor Verschmutzungen und einen damit einhergehenden Ausfall zu bewahren, kann das Kontaktsystem in einem Gehäuse angeordnet sein, wobei das Gehäuse aus einem Sockel und einem mittels Rast-/Schnappverbindungen am Sockel verrasteten Deckel besteht. Das Kontaktsystem ist am Sockel befestigt. Der einfachen Herstellbarkeit halber bietet es sich an, die Kontaktfläche für den Festkontakt an einem Trägerelement anzuordnen und das Trägerelement im Sockel einzuspritzen. Ebenso kann das Trägerteil für den Schaltkontakt im Sockel eingespritzt sein. Das Trägerelement sowie das Trägerteil können mit deren eingespritztem Ende in der Art von Anschlüssen aus dem Gehäuse herausragen, womit sich separate Anschlüsse für die elektrischen Zuleitungen zum Sensor erübrigen.

Die freien Enden der beiden von der Blattfeder abgehenden Schenkel können in etwa mittig bezüglich der Blattfeder, an einander gegenüberliegenden Seiten am Trägerteil eingespannt sein. Dadurch wird ein günstiger Betätigungsweg bis zum Umschalten des Kontaktsystems erreicht. Selbstverständlich ist jedoch auch eine andere Aufteilung der Längen der beiden Schenkel an der Blattfeder möglich. Zweckmäßigerweise ist die Einspannstelle am Trägerteil als Lagerkerbe in der Art eines Schneidenlagers ausgebildet.

In weiterer Ausgestaltung kann das Übertragungselement bei dessen Bewegung auf ein Betätigungselement einwirken, das am Gehäuse, und zwar insbesondere in einem Gehäuseansatz am Sockel, bewegbar gelagert ist. Das Betätigungselement wirkt dann seinerseits mittels eines Zapfens, auf das zweite Ende der die Kontaktfläche aufweisenden Blattfeder zum Schalten des Kontaktsystems ein. Dadurch kann das Gehäuse mit Kontaktsystem und Betätigungselement als vormontiertes Bauteil zur Verfügung gestellt werden, um dann eine einfache Endmontage in der gesamten Baugruppe für den Sensor zu gestatten.

Da das Kontaktsystem bistabil arbeitet ist, ist ein erneutes Schließen des Stromkreises nur durch Betätigung eines Rückstellelementes, beispielsweise in der Art eines Rückstellknopfes möglich, womit die Gefahr des Mehrfachschaltens im Grenzbereich wirksam verhindert ist. Um wiederum ein vormontierbares Bauteil zur Verfügung zu stellen, kann das Rückstellelement gegenüberliegend am Gehäuse, und zwar insbesondere an einem Gehäuseansatz am Sockel, bewegbar gelagert sein. Das Rückstellelement wirkt dann ebenfalls mittels eines Zapfens auf das zweite Ende der die Kontaktfläche aufweisenden Blattfeder zum erneuten Umschalten des Kontaktsystems ein.

Es bietet sich an, daß der jeweilige Zapfen durch eine Öffnung im Gehäuseansatz am Sockel in Richtung auf das zweite Ende der die Kontaktfläche aufweisenden Blattfeder hindurchragt. Um das Eindringen von Staub in das Gehäuse an der Öffnung zu verhindern, kann die Öffnung im Gehäuseansatz mittels einer den Zapfen umgebenden Dichtung abgedichtet sein. Damit das Betätigungs- sowie das Rückstellelement gegen eine elastische Kraft bewegbar sind, kann schließlich am jeweiligen Gehäuseansatz eine Druckfeder sowohl für das Betätigungselement als auch für das Rückstellelement angeordnet sein.

Die mit der Erfindung erzielten Vorteile bestehen neben den bereits genannten Verbesserungen insbesondere darin, daß der Sensor gegenüber Toleranzen im Hinblick auf die Länge des Riemens wenig empfindlich ist. Trotz einfacher Ausgestaltung besitzt der Sensor einen präzise definierten Umschaltpunkt. Beim Umschalten führt das Kontaktsystem eine schlagartige elektrische Öffnung zwischen Schalt- und Festkontakt aus, so daß selbst bei verschweißten Kontakten ein Umschalten erreicht wird. Schließlich werden auch gegenüber Lösungen mit herkömmlichen Schaltern kritische Situationen hinsichtlich Erwärmung kurz vor dem Schaltpunkt sicher vermieden. Damit arbeitet der erfindungsgemäße Sensor funktionssicherer als bisherige Sensoren. Zudem ist der Sensor kostengünstig herzustellen.

Ein Ausführungsbeispiel der Erfindung ist in den Zeichnungen dargestellt und wird im folgenden näher beschrieben. Es zeigen
- Fig. 1: eine Baugruppe mit einem Sensor zur Detektierung eines Risses in einem Riemen für ein Hausgerät in perspektivischer Ansicht,
- Fig. 2: den Sensor aus Fig. 1 in perspektivischer Ansicht,
- Fig. 3: den Sensor wie in Fig. 2, jedoch mit abgenommenem Deckel und somit geöffnetem Gehäuse und
- Fig. 4: den Sensor aus Fig. 2 im Längsschnitt.

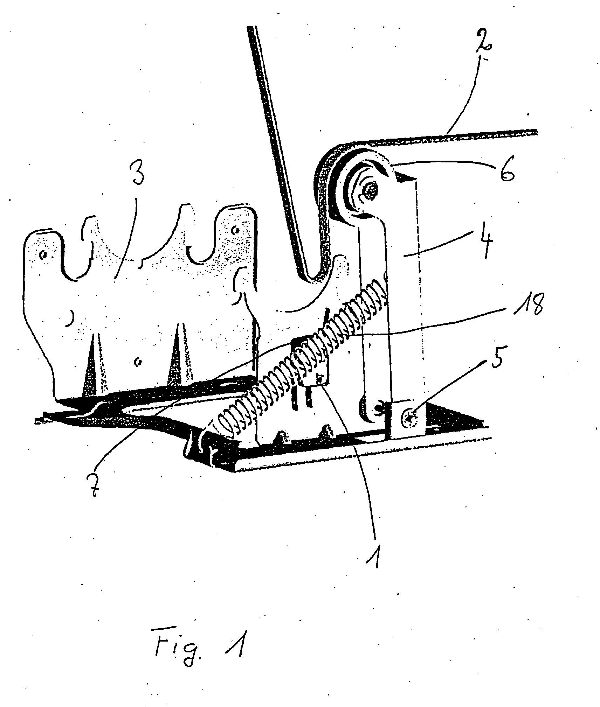

Zum Antrieb einer Trommel in einem Wäschetrockner, einer Waschmaschine oder einem sonstigen Hausgerät wird ein Elektromotor verwendet, der die Trommel über einen Antriebsriemen bewegt. Zur Feststellung eines Risses und/oder einer unzulässigen Längenänderung des Antriebsriemens findet ein Sensor 1 zur Detektierung eines Risses und/oder einer Längenänderung in einem Riemen 2 Verwendung, wie in Fig. 1 zu sehen ist.

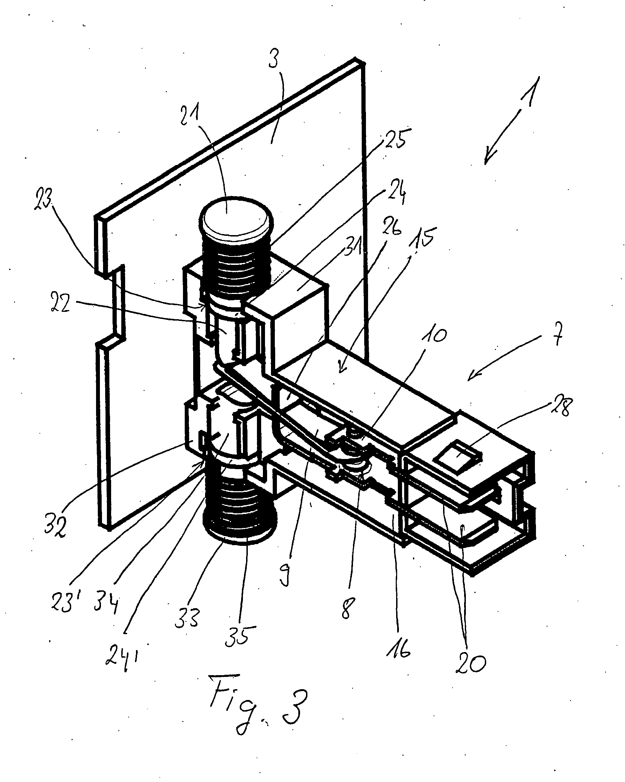

Der Sensor 1 ist in einer Halterung 3 im Hausgerät, wie dem Wäschetrockner, der Waschmaschine o. dgl., befestigt. An der Halterung 3 ist ein bewegbares Übertragungselement 4 angeordnet, das in Wirkverbindung mit dem Riemen 2 steht. Hierzu ist das Übertragungselement 4 als ein an der Halterung 3 einseitig und drehbar gelagerter Hebel ausgebildet. An dem dem Lager 5 gegenüberliegenden Ende des Hebels vom Übertragungselement 4 ist eine Rolle 6 angeordnet, an der der Riemen 2 entlanggeführt ist. Bei einer unzulässigen Längenänderung und/oder einem Riß des Riemens 2 verändert sich die Lage des Übertragungselementes 4 und dieses wirkt dabei derart auf einen elektrischen Schalter 7 mit einem in Fig. 3 sichtbaren Kontaktsystem 8 ein, daß das Kontaktsystem 8 umschaltet. Das entsprechende Schaltsignal des elektrischen Schalters 7 wird dann zur Feststellung des Riemenrisses bzw. zur Längenänderung des Riemens 2 ausgewertet.

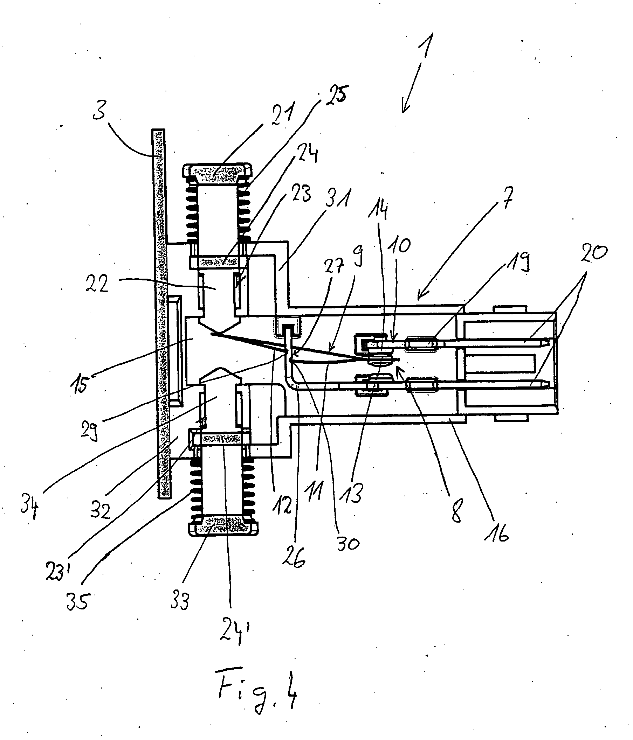

Der Aufbau des Sensors 1 ist näher in Fig. 3 und 4 zu sehen. Das Kontaktsystem 8 besteht aus einem blattfederartigen Schaltkontakt 9, wobei die Blattfeder 9 mit einer Kontaktfläche 13 versehen ist, und einem zugehörigen Festkontakt 10. Die Kontaktfläche 13 des Schaltkontakts 9 ist an einem ersten, in Fig. 4 rechts liegende Ende der Blattfeder 9 angeordnet. Das Übertragungselement 4 wirkt auf das andere zweite, in Fig. 4 links liegende Ende der Blattfeder 9 ein. Ein einseitig freier Schenkel 11 geht in etwa vom ersten Ende der Blattfeder 9 in Richtung zum zweiten Ende ab. Vom zweiten Ende der Blattfeder 9 geht wiederum ein weiterer einseitig freier Schenkel 12 in Richtung zum ersten Ende ab. Die freien Enden der beiden Schenkel 11, 12 sind jeweils an einem Trägerteil 26 des Schalters 7 mit einem Versatz 27 eingespannt. Bevorzugterweise ist das freie Ende der beiden von der Blattfeder 9 abgehenden Schenkel 11, 12 in etwa mittig bezüglich der Blattfeder 9, an einander gegenüberliegenden Seiten am Trägerteil 26 eingespannt, wobei die Einspannstellen am Trägerteil 26 als Lagerkerbe 29, 30 in der Art eines Schneidenlagers ausgebildet sein können. Durch Einwirkung des Übertragungselementes 4 schaltet dann der Schaltkontakt 9 des Kontaktsystems 8 kaskadenartig sowie bistabil um.

Wie anhand der Fig. 1 zu erkennen ist, ist das Übertragungselement 4 mittels eines elastischen Elements, bei dem es sich um eine Zugfeder 18 handelt, in Richtung auf den Schaltkontakt 9 beaufschlagt. Reißt nun der Riemen 2, so zieht die Zugfeder 18 das Übertragungselement 4 zum elektrischen Schalter 7, womit dessen Kontaktsystem 8, wie beschrieben, umschaltet.

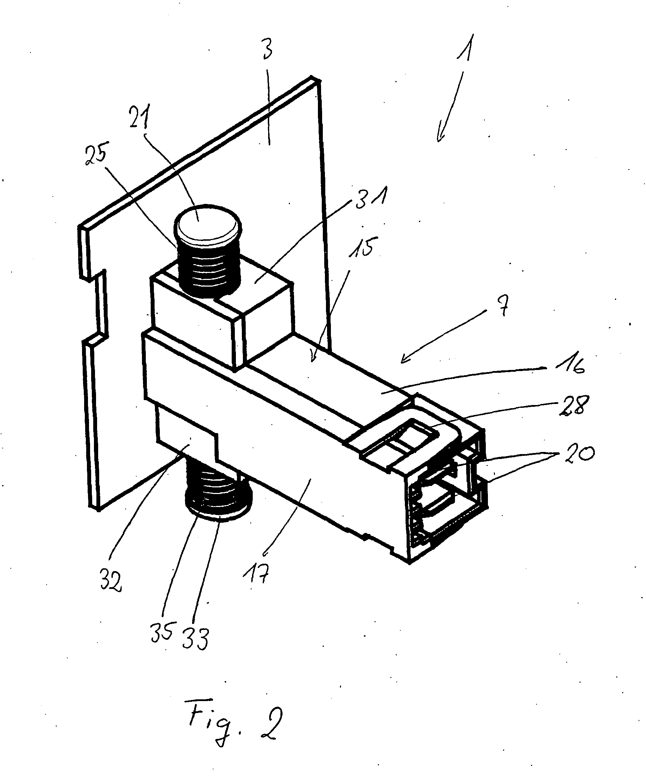

Das Kontaktsystem 8 ist in einem Gehäuse 15 angeordnet. Wie weiter in Fig. 2 zu sehen ist, setzt sich das aus Kunststoff bestehende Gehäuse 15 aus einem Sockel 16 und einem Deckel 17 zusammen, wobei der Deckel 17 mittels Rast-/Schnappverbindungen 28 am Sockel 16 verrastet ist. Das Kontaktsystem 8 ist am Sockel 16 befestigt. Hierfür ist das Trägerteil 26 in den Sockel 16 eingespritzt, indem das Trägerteil 26 bei der Herstellung des Sockels 16 durch Spritzgießen mit dem für den Sockel 16 verwendeten Kunststoff umspritzt wird, was auch aus Fig. 4 näher hervorgeht. Die Kontaktfläche 14 für den Festkontakt 10 ist an einem Trägerelement 19 angeordnet. Das Trägerelement 19 ist ebenfalls im Sockel 16 eingespritzt. Sowohl das Trägerelement 19 als auch das Trägerteil 26 ragen jeweils mit deren eingespritztem Ende in der Art von elektrischen Anschlüssen 20 aus dem Gehäuse 15 heraus, so daß dort die elektrischen Zuleitungen befestigt werden können.

Das Übertragungselement 4 wirkt bei dessen Bewegung, hervorgerufen durch den Riß bzw. der Längenänderung des Riemens 2, auf ein Betätigungselement 21 ein. Das in der Art eines Stößels ausgestaltete Betätigungselement 21 ist im Gehäuse 15, und zwar in einem Gehäuseansatz 31 am Sockel 16, gegen eine am Gehäuseansatz 31 angeordnete Druckfeder 25 bewegbar gelagert. Dabei wirkt das Betätigungselement 21 dann seinerseits auf das zweite Ende der die Kontaktfläche 13 aufweisenden Blattfeder 9 zum Schalten des Kontaktsystem 8 ein. Hierzu besitzt das Betätigungselement 21 einen Zapfen 22, der durch eine Öffnung 23 im Gehäuseansatz 31 in Richtung auf das zweite Ende der die Kontaktfläche 13 aufweisenden Blattfeder 9 hindurchragt.

Wegen der bistabilen Ausführung des Kontaktsystems 8 ist der Schalter 7 mit einem Rückstellelement 33 versehen. Das Rückstellelement 33 ist dem Betätigungselement 21 gegenüberliegend am Gehäuse 15, und zwar an einem Gehäuseansatz 32 am Sockel 16, gegen eine am Gehäuseansatz 32 angeordnete Druckfeder 35 bewegbar gelagert. Wiederum mittels eines Zapfens 34, der ebenfalls durch eine Öffnung 23' im Gehäuseansatz 32 in Richtung auf das zweite Ende der Blattfeder 9 hindurchragt, wirkt das Rückstellelement 33 auf das zweite Ende der die Kontaktfläche 13 aufweisenden Blattfeder 9 zum erneuten Umschalten des Kontaktsystems 8 ein. Mittels des Rückstellelements 33 kann somit nach einer Reparatur des Riemens 2 das Kontaktsystem 8 des Schalters 7 manuell zurückgeschaltet werden, womit der Sensor 1 für den nachfolgenden Betrieb des Wäschetrockners o. dgl. wiederum aktiviert ist.

Um das Eindringen von Schmutz, Staub o. dgl. in das Gehäuse 15 zu verhindern, sind die Öffnungen 23, 23' im Gehäuseansatz 31, 32 mittels einer den jeweiligen Zapfen 22, 34 umgebenden Dichtung 24, 24' abgedichtet. Eine Abdichtung an den Anschlüssen 20 wird dadurch erzielt, indem diese in den Sockel 16 eingespritzt sind. Der Sensor 1 arbeitet damit ausfallsicher auch unter den rauhen Einsatzbedingungen in einem Wäschetrockner, einer Waschmaschine oder einem sonstigen Hausgerät.

Die Erfindung ist nicht auf das beschriebene und dargestellte Ausführungsbeispiel beschränkt. Sie umfaßt vielmehr auch alle fachmännischen Weiterbildungen im Rahmen der durch die Patentansprüche definierten Erfindung. So kann ein derartiger Sensor 1 nicht nur in Haushaltsgeräten, wie Waschmaschinen, Wäschetrocknern o. dgl., sondern auch an sonstigen Riemen-Antrieben, beispielsweise von Werkzeugmaschinen, von Fahrzeugen o. dgl., Verwendung finden.

### Bezugszeichen-Liste:

- 1:: Sensor (für Riemenriß)
- 2:: Riemen
- 3:: Halterung
- 4:: Übertragungselement
- 5:: Lager (für Übertragungselement)
- 6:: Rolle
- 7:: elektrischer Schalter
- 8:: Kontaktsystem
- 9:: Schaltkontakt / Blattfeder
- 10:: Festkontakt
- 11,12:: freier Schenkel (an Blattfeder)
- 13:: Kontaktfläche (von Schaltkontakt)
- 14:: Kontaktfläche (von Festkontakt)
- 15:: Gehäuse
- 16:: Sockel
- 17:: Deckel
- 18:: Zugfeder
- 19:: Trägerelement (von Festkontakt)
- 20:: Anschluß
- 21:: Betätigungselement
- 22:: Zapfen (am Betätigungselement)
- 23,23':: Öffnung (im Gehäuse)
- 24,24':: Dichtung
- 25:: Druckfeder (am Betätigungselement)
- 26:: Trägerteil
- 27:: Versatz
- 28:: Rast-/Schnappverbindung
- 29,30:: Lagerkerbe (am Trägerteil)
- 31,32:: Gehäuseansatz
- 33:: Rückstellelement
- 34:: Zapfen (am Rückstellelement)
- 35:: Druckfeder (am Rückstellelement)

## Patentansprüche

1. Sensor zur Detektierung eines Risses und/oder einer Längenänderung in einem Riemen, insbesondere in einem Antriebsriemen für einen Elektromotor, wie für einen Wäschetrockner, eine Waschmaschine o. dgl., mit einem bewegbaren Übertragungselement (4), das in Wirkverbindung mit dem Riemen (2) steht, und mit einem ein Kontaktsystem (8) besitzenden elektrischen Schalter (7), wobei das Übertragungselement (4) derart auf den elektrischen Schalters (7) einwirkt, daß das Kontaktsystem (8) bei unzulässiger Längenänderung und/oder Riß des Riemens (2) umschaltet, **dadurch gekennzeichnet, daß** das Kontaktsystem (8) aus einem eine Blattfeder mit einer Kontaktfläche (13) aufweisenden Schaltkontakt (9) und einem zugehörigen Festkontakt (10) besteht, daß die Kontaktfläche (13) des Schaltkontakts (9) an einem ersten Ende der Blattfeder (9) angeordnet ist, daß das Übertragungselement (4) auf das andere zweite Ende der Blattfeder (9) einwirkt, daß ein einseitig freier Schenkel (11) in etwa vom ersten Ende der Blattfeder (9) in Richtung zum zweiten Ende abgeht, daß vom zweiten Ende der Blattfeder (9) ein weiterer einseitig freier Schenkel (12) in Richtung zum ersten Ende abgeht, und daß jeweils die freien Enden der beiden Schenkel (11, 12) an einem Trägerteil (26) des Schalters (7) mit einem Versatz (27) zueinander eingespannt sind, derart daß der Schaltkontakt (9) des Kontaktsystems (8) kaskadenartig sowie bistabil umschaltet.

2. Sensor zur Detektierung eines Risses und/oder einer Längenänderung in einem Riemen nach Anspruch 1, **dadurch gekennzeichnet, daß** das Übertragungselement (4) als einseitig gelagerter Hebel ausgebildet ist, daß eine Rolle (6) an dem dem Lager (5) gegenüberliegenden Ende des Hebels angeordnet ist, wobei der Riemen (2) an der Rolle (6) entlanggeführt ist, und daß das Übertragungselement (4) mittels eines elastischen Elements, insbesondere mittels einer Zugfeder (18), in Richtung auf den Schaltkontakt (9) beaufschlagt ist.

3. Sensor zur Detektierung eines Risses und/oder einer Längenänderung in einem Riemen nach Anspruch 1 oder 2, **dadurch gekennzeichnet, daß** das Kontaktsystem (8) in einem Gehäuse (15) angeordnet ist, wobei das Gehäuse (15) aus einem Sockel (16) und einem Deckel (17) besteht.

4. Sensor zur Detektierung eines Risses und/oder einer Längenänderung in einem Riemen nach Anspruch 3, **dadurch gekennzeichnet, daß** der Deckel (17) mittels Rast-/ Schnappverbindungen (28) am Sockel (16) verrastet ist.

5. Sensor zur Detektierung eines Risses und/oder einer Längenänderung in einem Riemen nach Anspruch 3 oder 4, **dadurch gekennzeichnet, daß** das Kontaktsystem (8) am Sockel (16) befestigt ist.

6. Sensor zur Detektierung eines Risses und/oder einer Längenänderung in einem Riemen nach einem der Ansprüche 1 bis 5, **dadurch gekennzeichnet, daß** die Kontaktfläche (14) für den Festkontakt (10) an einem Trägerelement (19) angeordnet ist.

7. Sensor zur Detektierung eines Risses und/oder einer Längenänderung in einem Riemen nach Anspruch 6, **dadurch gekennzeichnet, daß** das Trägerelement (19) im Sockel (16) eingespritzt ist, daß das Trägerteil (26) im Sockel (16) eingespritzt ist, und daß das Trägerelement (19) sowie das Trägerteil (26) mit deren eingespritzten Enden in der Art von elektrischen Anschlüssen (20) aus dem Gehäuse (15) herausragen.

8. Sensor zur Detektierung eines Risses und/oder einer Längenänderung in einem Riemen nach einem der Ansprüche 1 bis 7, **dadurch gekennzeichnet, daß** die freien Enden der beiden von der Blattfeder (9) abgehenden Schenkel (11, 12) in etwa mittig bezüglich der Blattfeder (9), an einander gegenüberliegenden Seiten am Trägerteil (26) eingespannt sind.

9. Sensor zur Detektierung eines Risses und/oder einer Längenänderung in einem Riemen nach Anspruch 8, **dadurch gekennzeichnet, daß** die Einspannstelle am Trägerteil (26) als Lagerkerbe (29, 30) in der Art eines Schneidenlagers ausgebildet ist.

10. Sensor zur Detektierung eines Risses und/oder einer Längenänderung in einem Riemen nach einem der Ansprüche 3 bis 9, **dadurch gekennzeichnet, daß** das Übertragungselement (4) bei dessen Bewegung auf ein Betätigungselement (21) einwirkt.

11. Sensor zur Detektierung eines Risses und/oder einer Längenänderung in einem Riemen nach Anspruch 10, **dadurch gekennzeichnet, daß** das Betätigungselement (21) im Gehäuse (15) bewegbar gelagert ist.

12. Sensor zur Detektierung eines Risses und/oder einer Längenänderung in einem Riemen nach Anspruch 11, **dadurch gekennzeichnet, daß** das Betätigungselement (21) an einem Gehäuseansatz (31) am Sockel (16) bewegbar gelagert ist.

13. Sensor zur Detektierung eines Risses und/oder einer Längenänderung in einem Riemen nach Anspruch 12, **dadurch gekennzeichnet, daß** das Betätigungselement (21) seinerseits mittels eines Zapfens (22) auf das zweite Ende der die Kontaktfläche (13) aufweisenden Blattfeder (9) zum Schalten des Kontaktsystems (8) einwirkt.

14. Sensor zur Detektierung eines Risses und/oder einer Längenänderung in einem Riemen nach Anspruch 13, **dadurch gekennzeichnet, daß** dem Betätigungselement (21) gegenüberliegend am Gehäuse (15) ein Rückstellelement (33) bewegbar gelagert ist.

15. Sensor zur Detektierung eines Risses und/oder einer Längenänderung in einem Riemen nach Anspruch 14, **dadurch gekennzeichnet, daß** das Rückstellelement (33) an einem Gehäuseansatz (32) am Sockel (16) bewegbar gelagert ist.

16. Sensor zur Detektierung eines Risses und/oder einer Längenänderung in einem Riemen nach Anspruch 15, **dadurch gekennzeichnet, daß** das Rückstellelement (33) mittels eines Zapfens (34) auf das zweite Ende der die Kontaktfläche (13) aufweisenden Blattfeder (9) zum erneuten Umschalten des Kontaktsystems (8) einwirkt.

17. Sensor zur Detektierung eines Risses und/oder einer Längenänderung in einem Riemen nach Anspruch 16, **dadurch gekennzeichnet, daß** der Zapfen (22) am Betätigungselement (21) durch eine Öffnung (23) im Gehäuseansatz (31) am Sockel (16) in Richtung auf das zweite Ende der die Kontaktfläche (13) aufweisenden Blattfeder (9) hindurchragt.

18. Sensor zur Detektierung eines Risses und/oder einer Längenänderung in einem Riemen nach Anspruch 17, **dadurch gekennzeichnet, daß** die Öffnung (23) im Gehäuseansatz (31) mittels einer den Zapfen (22) am Betätigungselement (21) umgebenden Dichtung (24) abgedichtet ist.

19. Sensor zur Detektierung eines Risses und/oder einer Längenänderung in einem Riemen nach einem der Ansprüche 17 oder 18, **dadurch gekennzeichnet, daß** der Zapfen (34) am Rückstellelement (33) durch eine Öffnung (23') im Gehäuseansatz (32) am Sockel (16) in Richtung auf das zweite Ende der die Kontaktfläche (13) aufweisenden Blattfeder (9) hindurchragt.

20. Sensor zur Detektierung eines Risses und/oder einer Längenänderung in einem Riemen nach Anspruch 19, **dadurch gekennzeichnet, daß** die Öffnung (23') im Gehäuseansatz (32) mittels einer den Zapfen (34) am Rückstellelement (33) umgebenden Dichtung (24') abgedichtet ist.

21. Sensor zur Detektierung eines Risses und/oder einer Längenänderung in einem Riemen nach einem der Ansprüche 17 bis 20, **dadurch gekennzeichnet, daß** das Betätigungselement (21) sowie das Rückstellelement (33) jeweils gegen eine am Gehäuseansatz (31, 32) angeordnete Druckfeder (25, 35) bewegbar sind.

## Claims

1. Sensor for detecting a rupture and/or a length change in a belt, in particular in a drive belt for an electric motor, such as a tumble-dryer, a washing machine or the like, with a movable transmission element (4), which is in operative connection with the belt (2), and with an electric switch (7) having a contact system (8), the transmission element (4) acting on the electric switch (7) in such a way that the contact system (8) switches when an inadmissible length change and/or rupture of the belt (2) occurs, **characterised in that** the contact system (8) consists of a switching contact (9) having a leaf spring with a contact face (13) and an associated fixed contact (10), **in that** the contact face (13) of the switching contact (9) is arranged on a first end of the leaf spring (9), **in that** the transmission element (4) acts on the other second end of the leaf spring (9), **in that** a leg (11), which is free on one side, extends approximately from the first end of the leaf spring (9) in the direction of the second end, **in that** a further leg (12), which is free on one side, extends from the second end of leaf spring (9) in the direction of the first end, and **in that**, in each case, the free ends of the two legs (11, 12) are clamped on a support part (26) of the switch (7) with an offset (27) with respect to one another, in such a way that the switching contact (9) of the contact system (8) switches in the manner of a cascade and in a bistable manner.

2. Sensor for detecting a rupture and/or a length change in a belt according to claim 1, **characterised in that** the transmission element (4) is configured as a lever mounted on one side, **in that** a roller (6) is arranged on the end of the lever opposing the bearing (5), the belt (2) being guided along the roller (6), and **in that** the transmission element (4) is loaded by means of a resilient element, in particular by means of a tension spring (18), in the direction of the switching contact (9).

3. Sensor for detecting a rupture and/or a length change in a belt according to claim 1 or 2, **characterised in that** the contact system (8) is arranged in a housing (15), wherein the housing (15) consist of a base (16) and a cover (17).

4. Sensor for detecting a rupture and/or a length change in a belt according to claim 3, **characterised in that** the cover (17) is latched by means of latching/snap-on connections (28) on the base (16).

5. Sensor for detecting a rupture and/or a length change in a belt according to claim 3 or 4, **characterised in that** the contact system (8) is fastened to the base (16).

6. Sensor for detecting a rupture and/or a length change in a belt according to any one of claims 1 to 5, **characterised in that** the contact face (14) for the fixed contact (10) is arranged on a support element (19).

7. Sensor for detecting a rupture and/or a length change in a belt according to claim 6, **characterised in that** the support element (19) is injection-moulded in the base (16), **in that** the support part (26) is injection-moulded in the base (16), and **in that** the support element (19) and the support part (26) project with their injection-moulded ends in the manner of electrical terminals (20) from the housing (15).

8. Sensor for detecting a rupture and/or a length change in a belt according to any one of claims 1 to 7, **characterised in that** the free ends of the two legs (11, 12) extending from the leaf spring (9) are clamped approximately centrally with respect to the leaf spring (9), on mutually opposing sides of the carrier part (26)

9. Sensor for detecting a rupture and/or a length change in a belt according to claim 8, **characterised in that** the clamping point on the support part (26) is configured as a bearing notch (29, 30) in the manner of a cutting edge bearing.

10. Sensor for detecting a rupture and/or a length change in a belt according to any one of claims 3 to 9, **characterised in that** the transmission element (4), upon the movement thereof, acts on an actuating element (21).

11. Sensor for detecting a rupture and/or a length change in a belt according to claim 10, **characterised in that** the actuating element (21) is movably mounted in the housing (15).

12. Sensor for detecting a rupture and/or a length change in a belt according to claim 11, **characterised in that** the actuating element (21) is movably mounted on a housing attachment (31) on the base (16).

13. Sensor for detecting a rupture and/or a length change in a belt according to claim 12, **characterised in that** the actuating element (21) in turn acts by means of a pin (22) on the second end of the leaf spring (9) having the contact face (13) to switch the contact system (8).

14. Sensor for detecting a rupture and/or a length change in a belt according to claim 13, **characterised in that** a resetting element (33) is movably mounted opposite the actuating element (21) on the housing (15).

15. Sensor for detecting a rupture and/or a length change in a belt according to claim 14, **characterised in that** the resetting element (33) is movably mounted on a housing attachment (32) on the base (16).

16. Sensor for detecting a rupture and/or a length change in a belt according to claim 15, **characterised in that** the resetting element (33) acts by means of a pin (34) on the second end of the leaf spring (9) having the contact face (13) for the contact system (8) to be switched again.

17. Sensor for detecting a rupture and/or a length change in a belt according to claim 16, **characterised in that** the pin (22) on the actuating element (21) projects through an opening (23) in the housing attachment (31) on the base (16) in the direction of the second end of the leaf spring (9) having the contact face (13).

18. Sensor for detecting a rupture and/or a length change in a belt according to claim 17, **characterised in that** the opening (23) in the housing attachment (31) is sealed by means of a seal (24) surrounding the pin (22) on the actuating element (21).

19. Sensor for detecting a rupture and/or a length change in a belt according to either of claims 17 or 18, **characterised in that** the pin (34) on the resetting element (33) projects through an opening (23') in the housing attachment (32) on the base (16) in the direction of the second end of the leaf spring (9) having the contact face (13).

20. Sensor for detecting a rupture and/or a length change in a belt according to claim 19, **characterised in that** the opening (23') in the housing attachment (32) is sealed by means of a seal (24') surrounding the pin (34) on the resetting element (33).

21. Sensor for detecting a rupture and/or a length change in a belt according to any one of claims 17 to 20, **characterised in that** the actuating element (21) and the resetting element (33) can be moved, in each case, against a compression spring (25, 35) arranged on the housing attachment (31, 32).

## Revendications

1. Capteur pour détecter une fissure et/ou une variation de longueur d'une courroie, notamment d'une courroie d'entraînement d'un moteur électrique tel qu'un moteur de sèche-linge, de machine à laver ou autres, ayant un élément de transmission (4) mobile, coopérant avec la courroie (2) et un commutateur électrique (7) ayant un système de contacts (8),
* l'élément de transmission (4) agissant sur le commutateur électrique (7) pour qu'en cas de variation de longueur non autorisée et/ou de fissure de la courroie (2), le système de contacts (8) commute,
capteur **caractérisé en ce que**
- le système de contacts (8) se compose d'un contact de commutation (9) muni d'un ressort-lame avec une surface de contact (13) et un contact fixe (10) associé,
- la surface de contact (13) du contact de commutation (9) est prévue à une première extrémité du ressort-lame (9),
- l'élément de transmission (4) agit sur l'autre seconde extrémité du ressort-lame (9),
- une branche libre d'un côté (11) est issue sensiblement d'une première extrémité du ressort-lame (9) en direction de la seconde extrémité,
- une autre branche libre d'un côté (12), est issue de la seconde extrémité du ressort-lame (9) en direction de la première extrémité, et
- les extrémités libres des deux branches (11, 12), sont fixées dans une pièce de support (26) du commutateur (7) avec un décalage (27) l'une par rapport à l'autre de façon que le contact de commutation (9) du système de contacts (8), commute en cascade et de manière bistable.

2. Capteur de détection d'une fissure et/ou d'une variation de longueur d'une courroie selon la revendication 1,
**caractérisé en ce que**
- l'élément de transmission (4) est réalisé sous la forme d'un levier du second genre,
- un galet (6) est prévu à l'extrémité du levier à l'opposé du palier (5),
* la courroie (2) étant guidée le long du galet (6), et
- l'élément de transmission (4) est sollicité par un élément élastique notamment par un ressort de traction (18) en direction du contact de commutation (9).

3. Capteur de détection d'une fissure et/ou d'une variation de longueur d'une courroie selon l'une des revendications 1 ou 2,
**caractérisé en ce que**
le système de contacts (8) est logé dans un boîtier (15),
* le boîtier (15) se compose d'un socle (16) et d'un couvercle (17).

4. Capteur de détection d'une fissure et/ou d'une variation de longueur d'une courroie selon la revendication 3,
**caractérisé en ce que**
le couvercle (17) est accroché au socle (16) par des liaisons par enclipage ou accrochage (28).

5. Capteur de détection d'une fissure et/ou d'une variation de longueur d'une courroie selon l'une des revendications 3 ou 4,
**caractérisé en ce que**
le système de contacts (8) est fixé au socle (16).

6. Capteur de détection d'une fissure et/ou d'une variation de longueur d'une courroie selon l'une des revendications 1 à 5,
**caractérisé en ce que**
la surface de contact (14) du contact fixe (10), est prévue sur un élément de support (19).

7. Capteur de détection d'une fissure et/ou d'une variation de longueur d'une courroie selon la revendication 6,
**caractérisé en ce que**
- l'élément de support (19) est intégré par injection dans le socle (16),
- la pièce de support (26) est intégrée par injection dans le socle (16), et
- l'élément de support (19) et la pièce de support (26) viennent en saillie du boîtier (15) par les extrémités injectées, à la manière de branchements électriques (20).

8. Capteur de détection d'une fissure et/ou d'une variation de longueur d'une courroie selon l'une des revendications 1 à 7,
**caractérisé en ce que**
chaque extrémité libre des deux branches (11, 12) partant du ressort-lame (9), est accrochée sensiblement au milieu par rapport au ressort-lame (9) dans des côtés opposés de la pièce de support (26).

9. Capteur de détection d'une fissure et/ou d'une variation de longueur d'une courroie selon la revendication 8,
**caractérisé en ce que**
le point d'accrochage sur la pièce de support (26) est réalisé sous la forme d'une encoche de palier (29, 30) à la manière d'un palier en couteau.

10. Capteur de détection d'une fissure et/ou d'une variation de longueur d'une courroie selon l'une des revendications 3 à 9,
**caractérisé en ce que**
lors de son mouvement, l'élément de transmission (4) agit sur un élément d'actionnement (21).

11. Capteur de détection d'une fissure et/ou d'une variation de longueur d'une courroie selon la revendication 10,
**caractérisé en ce que**
l'élément d'actionnement (21) est logé de manière mobile dans le boîtier (15).

12. Capteur de détection d'une fissure et/ou d'une variation de longueur d'une courroie selon la revendication 11,
**caractérisé en ce que**
l'élément d'actionnement (21) est monté mobile sur un épaulement de boîtier (31) du socle (16).

13. Capteur de détection d'une fissure et/ou d'une variation de longueur d'une courroie selon la revendication 12,
**caractérisé en ce que**
l'élément d'actionnement (21) agit de son côté par un goujon (22) sur la seconde extrémité du ressort-lame (9) portant la surface de contact (13) pour commuter le système de contacts (8).

14. Capteur de détection d'une fissure et/ou d'une variation de longueur d'une courroie selon la revendication 13,
**caractérisé en ce que**
un élément de rappel (33) est monté de manière mobile dans le boîtier (15) en regard de l'élément d'actionnement (21).

15. Capteur de détection d'une fissure et/ou d'une variation de longueur d'une courroie selon la revendication 14,
**caractérisé en ce que**
l'élément de rappel (33) est monté de manière mobile dans un prolongement de boîtier (32) sur le socle (16).

16. Capteur de détection d'une fissure et/ou d'une variation de longueur d'une courroie selon la revendication 15,
**caractérisé en ce que**
l'élément de rappel (33) agit par l'intermédiaire d'un goujon (34) sur la seconde extrémité du ressort-lame (9) portant la surface de contact (13) pour commuter de nouveau le système de contacts (8).

17. Capteur de détection d'une fissure et/ou d'une variation de longueur d'une courroie selon la revendication 16,
**caractérisé en ce que**
le goujon (22) de l'élément d'actionnement (21), traverse une ouverture (23) d'un prolongement de boîtier (31) du socle (16) en direction de la seconde extrémité du ressort-lame (9) portant la surface de contact (13).

18. Capteur de détection d'une fissure et/ou d'une variation de longueur d'une courroie selon la revendication 17,
**caractérisé en ce que**
l'ouverture (23) dans le prolongement de boîtier (31), est rendue étanche par un joint (24) entourant le goujon (22) de l'élément d'actionnement (21).

19. Capteur de détection d'une fissure et/ou d'une variation de longueur d'une courroie selon l'une des revendications 17 ou 18,
**caractérisé en ce que**
le goujon (34) de l'élément de rappel (33) passe par une ouverture (23') du prolongement de boîtier (32) du socle (16) en direction de la seconde extrémité du ressort-lame (9) portant la surface de contact (13).

20. Capteur de détection d'une fissure et/ou d'une variation de longueur d'une courroie selon la revendication 19,
**caractérisé en ce que**
l'ouverture (23') du prolongement de boîtier (32), est rendue étanche par un joint (24') entourant le goujon (34) de l'élément de rappel (33).

21. Capteur de détection d'une fissure et/ou d'une variation de longueur d'une courroie selon l'une des revendications 17 à 20,
**caractérisé en ce que**
l'élément d'actionnement (21) et l'élément de rappel (33) sont déplacés chacun par un ressort de compression (25, 35) prévu sur le prolongement de boîtier (31, 32).
